# FASCICULE DE BREVET EUROPEEN

(11) **EP 2 285 594 B1**
(45) Date de publication et mention de la délivrance du brevet: **28.12.2011**
(21) Numéro de dépôt: 09742054.1
(22) Date de dépôt: 05.05.2009
(51) Int. Cl.: B60C 9/08

(54) **PNEUMATIQUE RENFORCE POUR VEHICULE LOURD**
VERSTÄRKTER REIFEN FÜR LASTKRAFTWAGEN
REINFORCED TYRE FOR HEAVY GOODS VEHICLE

(30) Priorité: 07.05.2008 FR 0853022
(43) Date de publication de la demande: 23.02.2011
(73) Titulaire: Société de Technologie MICHELIN, 63000 Clermont-Ferrand (FR); MICHELIN Recherche et Technique S.A., 1763 Granges-Paccot (CH)
(72) Inventeur: ESTENNE, Vincent, F-63118 Cebazat (FR); COGNE, Michael, F-63200 Riom (FR)
(74) Mandataire: Diernaz, Christian
(86) Numéro de dépôt international: PCT/EP2009/055409
(87) Numéro de publication internationale: WO 2009/135836

(56) Documents cités:
- FR-A- 1 310 491
- FR-A- 1 452 730
- US-A- 5 827 381

## Description

L'invention concerne les pneumatiques à armature de carcasse métallique et plus particulièrement le renforcement de tels pneumatiques dans leurs flancs.

Un pneumatique ayant les caractéristiques techniques du préambule de la revendication 1 est connu du document FR-A- 1310491.

De façon usuelle, les pneumatiques destinés à des utilisations sur véhicules poids lourd comprennent une armature de carcasse formée d'au moins une nappe de renforts métalliques enrobés dans un matériau caoutchouc, cette armature ayant en autre pour rôle de résister à la pression interne de gonflage du pneumatique. Cette armature de carcasse est ancrée à ses extrémités dans des bourrelets de pneumatique destinés à venir en contact avec des sièges d'une jante de montage. L'ancrage de l'armature de carcasse peut notamment être réalisé par enroulement autour de renfort circonférentiel de bourrelet comme une tringle. Une armature de carcasse est dite radiale dans le présent document dès lors que les renforts qui la composent font un angle moyen supérieur à 75 degrés avec la direction circonférentielle.

Par ailleurs, le pneumatique comprend, radialement au delà des bourrelets, des zones de flanc subissant des cycles de variations de courbure pendant le roulage à chaque passage dans le contact avec la chaussée. L'armature de carcasse est par ailleurs ceinturée par une armature de sommet formée par l'empilement de plusieurs nappes de renforts, ces renforts étant généralement croisés entre eux d'une nappe à la suivante, cette armature de sommet étant elle-même surmontée radialement à l'extérieur par une bande de roulement destinée à être en contact avec la chaussée pendant le roulage du pneumatique.

En cours de roulage, les flancs du pneumatique, et par voie de conséquence l'armature de carcasse, sont soumis à des cycles de variations de courbure. Ces sollicitations cycliques de flexion des renforts de l'armature de carcasse sont amplifiées quand le pneumatique est partiellement, voire totalement, dégonflé : d'une part, l'amplitude entre le rayon de courbure maximal et le rayon de courbure minimal augmente et d'autre part la valeur du rayon minimal de courbure diminue.

Ce mécanisme peut intervenir par exemple dans le cas d'un usage de pneumatiques en monte jumelée, l'un des pneumatiques étant partiellement ou totalement dégonflé et l'autre restant gonflé. Dans ce cas, l'armature de carcasse du pneumatique dégonflé est soumise à une tension faible ou nulle, compte tenu de l'absence de pression de gonflage, tout en étant soumise à des variations de courbure. Ces cycles de fortes flexions, alors que les renforts de l'armature de carcasse ne sont pas tendus, génèrent une fatigue des renforts métalliques de l'armature de carcasse.

Cette fatigue des renforts métalliques diminue leur résistance à la rupture sous tension et peut conduire à des éclatement au moment du regonflage du pneumatique à sa pression nominale après réparation notamment. Ce problème est connu sous le nom de *"zipper failure"* ou rupture en "boutonnière". L'éclatement s'accompagne d'une rupture s'étendant sur une plus ou moins grande longueur circonférentielle dans l'un des flancs. Avec cet éclatement, une onde de surpression se propage au voisinage du pneumatique.

La présente invention cherche tout à la fois à limiter la fatigue des renforts métalliques de l'armature de carcasse et à limiter l'onde de surpression résultant d'un éclatement au moment du regonflage d'un pneumatique dont l'armature de carcasse aurait malgré tout subi une fatigue de ses renforts métalliques.

Un objectif de cette invention est de combiner une réduction de la fatigue des renforts métalliques de carcasse sous des conditions sévères de roulage, avec une limitation d'une éventuelle surpression générée au voisinage du pneumatique suite à la libération d'énergie résultant de la propagation de la rupture de l'armature de carcasse.

Dans ce but, il est proposé un pneumatique pour véhicule portant de lourdes charge, ce pneu délimitant une cavité interne de gonflage et comprenant une armature de carcasse radiale surmontée radialement à l'extérieur par une armature de sommet, l'armature de carcasse étant formée par une pluralité de renforts métalliques enrobés dans un matériau d'enrobage en caoutchouc, les renforts de l'armature de carcasse faisant un angle au moins supérieur à 75° avec la direction circonférentielle. Ce pneumatique comprend en outre des bourrelets prévus pour être en contact avec une jante de montage, l'armature de carcasse étant ancrée dans ces bourrelets. Ce pneumatique comprenant deux flancs, chaque flanc s'étendant entre un bourrelet et le sommet, les deux flancs comprenant une première armature additionnelle pouvant être disposée entre l'armature de carcasse et la cavité interne du pneu (c'est-à-dire à l'intérieur de l'armature de carcasse) ou axialement à l'extérieur de l'armature de carcasse (c'est-à-dire à l'extérieur de l'armature de carcasse) et au moins l'un des flancs comprenant une deuxième armature additionnelle de renfort.

Ce pneumatique est caractérisé en ce que la première armature additionnelle comprend une pluralité de renforts de nature textile orientés selon un angle au moins égal à 80 degrés et au plus à 90 degrés avec la direction circonférentielle.

En outre, ce pneu est caractérisé en ce que la deuxième armature additionnelle comprend, dans le sens circonférentiel et de façon alternée, une pluralité de premières parties et de deuxièmes parties, au moins une de ces parties comportant une pluralité de renforts enrobés dans un matériau de caoutchouc, ces renforts étant orientés dans une direction proche ou identique à celle des renforts de l'armature de carcasse. La largeur de chaque deuxième partie de la deuxième armature mesurée aux points de la deuxième armature additionnelle radialement les plus à l'intérieur est au moins égale à 20 mm, cette largeur étant mesurée dans une direction perpendiculaire à la direction circonférentielle sur le pneu. La largeur d'une partie d'armature peut être mesurée sur le produit semi fini avant son incorporation à la fabrication du pneu ; sur le pneu cette largeur peut correspondre sensiblement à la largeur mesurée aux points de ladite armature radialement les plus à l'intérieur, c'est-à-dire les plus proches de l'axe de rotation. La largeur des deuxièmes parties est très supérieure à la distance entre chaque renfort dans l'armature.

Chacune de ces parties a une résistance à la rupture propre, c'est-à-dire une force à rupture par unité de largeur d'armature (cette largeur étant mesurée dans la direction circonférentielle c'est-à-dire dans une direction perpendiculaire aux renforts quand ceux-ci font un angle de 90 degrés avec la direction circonférentielle). Cette deuxième armature est formée de façon que la résistance à la rupture des deuxièmes parties soit inférieure à la résistance à la rupture des premières parties.

Enfin, la première armature additionnelle et la deuxième armature additionnelle sont placées de part et d'autre de l'armature de carcasse (si la première armature additionnelle est placée à l'intérieur de l'armature de carcasse, c'est-à-dire entre l'armature de carcasse et la cavité interne du pneu, alors la deuxième armature additionnelle est placée à l'extérieur de l'armature de carcasse).

Selon cette invention, la première armature additionnelle permet de limiter la déformation (en évitant de trop fortes courbures) de l'armature de carcasse lors d'une baisse de pression du pneu et la deuxième armature par sa structure propre permet de limiter l'étendue d'une éventuelle rupture de l'armature de carcasse.

Par ailleurs, la deuxième armature additionnelle utilisant une succession de premières parties et de deuxièmes parties ayant des résistances à la rupture différentes, il est possible de former une sorte de barrière à la propagation, dans la direction circonférentielle, de la rupture des renforts de l'armature de carcasse, en limitant la longueur circonférentielle totale de l'ouverture. Il a été constaté de manière surprenante qu'en réduisant significativement la longueur circonférentielle de l'ouverture du flanc du pneumatique, il est possible de diminuer l'effet de souffle produit par l'éclatement du pneumatique.

Préférentiellement, la première armature additionnelle est placée entre l'armature de carcasse et la matière de caoutchouc assurant l'étanchéité de la cavité interne du pneu à l'intérieur de laquelle s'exerce la pression de gonflage (c'est-à-dire à l'intérieur de l'armature de carcasse). Afin de ne pas reprendre de tension de l'armature de carcasse, ces première et deuxième armatures s'étendent dans la direction radiale (perpendiculairement à l'axe de rotation) sur une hauteur au plus égale à 80% de la hauteur de section du pneu. La hauteur de section du pneu est mesurée lorsque le pneu est monté sur sa jante de montage et gonflé à sa pression d'utilisation entre les points radialement les plus à l'intérieur des bourrelets et les points de l'armature de carcasse radialement les plus à l'extérieur.

Préférentiellement, la largeur des deuxièmes parties de la deuxième armature, aux points de la deuxième armature additionnelle radialement les plus à l'intérieur, est au moins égale à 20 mm et au plus égale à 60 mm et la somme des largeurs d'une première partie 51 et d'une deuxième partie 52 est au moins égale à 40 mm et au plus égale à 80 mm.

La première armature additionnelle est avantageusement constituée de renforts textiles choisis parmi les renforts en polyamide ou en aramide, polycétone, polyester, rayonne ; ils peuvent également être de nature hybride, c'est-à-dire formés avec au moins deux câblés textiles de natures différentes.

Avantageusement, la première armature additionnelle comporte une succession de premières parties et de deuxièmes parties ayant des résistances à la rupture différentes, ces résistances à la rupture étant mesurées sur une largeur unitaire d'armature prise dans la direction circonférentielle. Afin d'obtenir une combinaison encore plus efficace sur le plan de la performance, il est judicieux de placer les parties les plus résistante de la première armature additionnelle en coïncidence circonférentielle avec les parties les plus résistantes de la deuxième armature additionnelle.

Préférentiellement, les première et deuxième armatures additionnelles s'étendent dans l'un au moins des flancs radialement de part et d'autre des points axialement les plus à l'extérieur quand le pneu est monté sur sa jante de montage et gonflé à sa pression d'utilisation.

Il est avantageux que la deuxième armature soit dans le flanc du pneu qui, lorsque le pneu est monté sur un véhicule, se trouve côté extérieur dudit véhicule.

Pour atteindre l'objectif visé, il est nécessaire que les première et deuxième armatures additionnelles soient aptes à résister aux cycles de flexion que subit l'armature de carcasse ; par aptes à résister aux cycles de flexion, on entend que les renforts composant ces armatures additionnelles conservent sensiblement leur résistance à la rupture à l'état initial. Préférentiellement, les renforts des première et deuxième armatures additionnelles sont choisis parmi des renforts de nature textile. Les renforts (notamment ceux des premières parties) de la deuxième armature additionnelle peuvent être métalliques à la condition que le diamètre du fil élémentaire soit approprié pour atteindre une résistance à la fatigue en flexion très supérieure à celle des renforts de l'armature de carcasse.

Préférentiellement, la première armature additionnelle d'un pneumatique selon l'invention comprend, vue dans un plan de coupe méridien (c'est-à-dire contenant l'axe de rotation), deux extrémités, cette première armature additionnelle s'étendant entre ces deux extrémités dans l'un au moins des flancs au moins entre un point situé radialement à l'intérieur du point axialement le plus à l'extérieur du profil de l'armature de carcasse du pneumatique monté sur sa jante de montage et gonflé à sa pression d'usage, et un point situé au voisinage d'une extrémité axiale de l'armature de sommet. Si cette première armature additionnelle est positionnée à l'extérieur de l'armature de carcasse, il est préférable que son extrémité radialement vers l'extérieur soit distante de l'extrémité de l'armature de sommet d'une distance au moins égale à 10 mm.

Pour former des premières parties de la deuxième armature additionnelle, de plus grande résistance à la rupture, on peut employer des renforts textiles de plus forte résistance à la rupture que celles des renforts textiles des deuxièmes parties de la même deuxième armature additionnelle. Ces renforts textiles peuvent être orientés dans la direction méridienne, c'est-à-dire dans un plan contenant l'axe de rotation du pneumatique, ou encore dans toute autre direction.

Dans une autre variante préférentielle, la deuxième armature additionnelle ne comporte qu'une pluralité de premières parties, formées chacune par une nappe de renforts textiles, ces premières parties étant disjointes les unes des autres dans la direction circonférentielle. Les renforts textiles sont disposés radialement sur le pneumatique c'est-à-dire selon une direction faisant un angle égal à 90 degrés avec la direction circonférentielle sur le pneumatique. L'espace entre deux premières parties correspond à une deuxième partie de résistance à la rupture égale à zéro. Ces deuxièmes parties ne comportent aucun élément de renfort ni même de mélange de caoutchouc. Cette variante est particulièrement adaptée au cas où les premières parties comprennent des renforts métalliques.

Dans une autre variante, les deuxièmes parties de la deuxième armature peuvent être constituée par le même mélange de caoutchouc que celui des premières parties afin de faciliter la pose de l'armature additionnelle en cours de fabrication du pneumatique. La largeur de ces deuxièmes parties est très supérieure à la distance séparant chaque renfort des premières parties de la deuxième armature ; cette largeur est au moins dix fois supérieure à cette distance entre chaque renfort et supérieure à 20 mm sur le produit semi fini avant son incorporation à la fabrication d'un pneu selon l'invention.

Dans une autre variante, la deuxième armature additionnelle est une nappe en mélange de caoutchouc renforcée par des renforts textiles parallèles les uns aux autres, ces renforts textiles étant coupés au moins en un endroit de leur longueur sur une pluralité de régions de ladite nappe. Par région, on entend ici que sur une largeur donnée de la nappe correspondant à la largeur de ladite région (et mesurée perpendiculairement aux renforts de l'armature additionnelle), les renforts sont tous coupés de manière à créer, dans ladite armature additionnelle, une deuxième partie de faible résistance à la rupture. Préférentiellement, la au moins une coupure réalisée sur un renfort est localisée de manière à être située dans le flanc du pneumatique dans la région dudit flanc correspondant au point de l'armature de carcasse axialement le plus à l'extérieur (axialement à l'extérieur étant pris par référence à la cavité interne du pneumatique) voire radialement vers l'extérieur de ce point.

On peut également prévoir que la deuxième armature additionnelle est renforcée, dans les deuxièmes parties de faible résistance à la rupture, par des renforts discontinus orientés dans une direction faisant un angle égal ou proche de 90 degrés avec l'a direction circonférentielle. Ces discontinuités peuvent aisément être obtenues après confection de cette armature additionnelle avec des renforts continus en coupant en plusieurs endroits chacun des renforts pour constituer des deuxièmes parties.

Dans une autre variante de réalisation, la deuxième armature additionnelle est une nappe en mélange de caoutchouc renforcée d'une succession de renforts de natures différentes ayant des résistances à la rupture différentes, ces renforts étant disposés sensiblement parallèlement les uns aux autres. Les renforts de même nature sont groupés de manière à constituer des parties de longueur moyenne circonférentielle appropriée. Ces parties de résistances à la rupture sont disposées en alternance dans la direction circonférentielle.

Préférentiellement, les renforts textile de la deuxième armature additionnelle sont choisis parmi des renforts en polyamide, aramide ou polycétone ; ils peuvent également être de nature hybride, c'est-à-dire formés avec au moins deux câblés textiles de natures différentes.

Si la deuxième armature additionnelle peut être indifféremment positionnée d'un côté ou de l'autre de l'armature de carcasse, il est avantageux de la positionner de manière que l'armature de carcasse se trouve entre cette deuxième armature additionnelle et la cavité interne du pneumatique à l'intérieur de laquelle s'exerce la pression de gonflage du pneumatique. Il est en outre possible de prévoir un matériau de découplage entre l'armature de carcasse et cette deuxième armature additionnelle.

Dans toutes les variantes présentées employant des renforts, il est avantageux que ces renforts de la deuxième armature additionnelle fassent sur le pneumatique un angle égal à 90 degrés ou peu différent de 90 degrés (c'est-à-dire au moins 80 degrés) avec la direction circonférentielle.

D'autres caractéristiques et avantages de l'invention ressortent de la description faite ci-après en référence aux dessins annexés qui montrent, à titre d'exemples non limitatifs, des formes de réalisation de l'objet de l'invention.

Figure 1 : vue partielle d'un flanc d'un pneumatique à armature de carcasse radiale, de l'art antérieur, après test d'éclatement ;

Figure 2 : vue en coupe méridienne d'un pneumatique selon l'art antérieur ;

Figure 3 : vue en coupe méridienne d'un pneumatique selon l'invention ;

Figure 4 : vue partielle en coupe selon la ligne II-II d'un flanc du pneumatique de la figure 3 ;

Figure 5 : vue partielle en coupe d'une variante de l'invention.

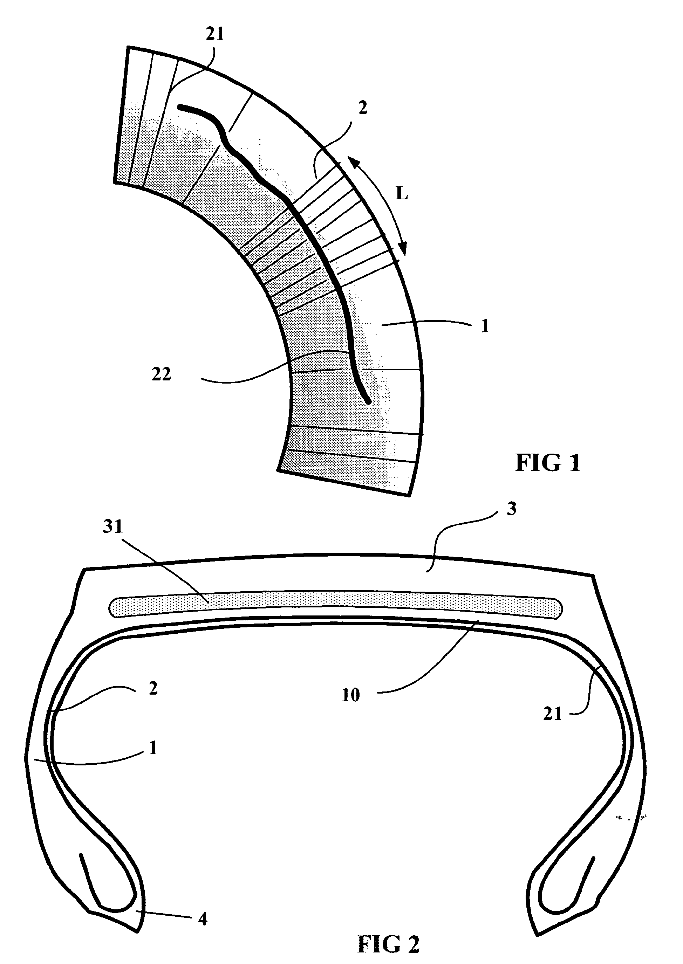

Le pneumatique 10 de dimension 315/80 R 22.5 montré en coupe méridienne sur la figure 2, c'est-à-dire dans un plan de coupe contenant l'axe de rotation du pneumatique, comprend des flancs 1 de part et d'autre d'un sommet 3, chaque flanc 1 se terminant par des bourrelets 4 destinés à être en contact avec une jante de montage (non représentée sur cette figure). Ce pneumatique est renforcé par une armature de carcasse 2 formée elle-même d'une pluralité de renforts 21 orientés de façon à faire un angle de 90 degrés avec la direction circonférentielle (direction qui est perpendiculaire au plan de la figure 2). Les renforts 21 de l'armature de carcasse sont des assemblages de 19 fils de 0.18 mm de diamètre dépourvus de frette autour desdits renforts. L'armature de carcasse s'étend dans le sommet 3 et est surmontée radialement à l'extérieur par une armature de sommet 31 ; l'armature de carcasse s'étend dans les flancs 1 et se termine par un ancrage dans les bourrelets 4.

Pour cette dimension de pneumatique, le volume de la cavité interne à l'intérieur de laquelle est confinée la pression de gonflage est de 140 litres.

La figure 1 montre partiellement un des flancs 1 du pneumatique représenté à la figure 2 après avoir subi un test d'éclatement. Ce test consiste, après avoir au préalable coupé des renforts 21 de carcasse sur une longueur circonférentielle L entre 30 à 80 mm (mesurée sensiblement au point axialement le plus à l'extérieur du pneumatique), à monter le pneumatique sur une roue et à gonfler ce pneumatique jusqu'à son éclatement. Au cours de ce test, on mesure la pression d'éclatement et la pression acoustique à une distance de 1 m du pneumatique. Après test, on mesure la longueur circonférentielle de l'ouverture 22 sur le flanc du pneumatique.

Dans le cas d'espèce, un pneumatique de dimension 315/80 R 22.5, pour lequel la zone coupée est de longueur circonférentielle L égale à 30 mm, la pression acoustique mesurée atteint une valeur de 4,5 bars pour une pression d'éclatement de 14 bars. La longueur circonférentielle de l'ouverture après éclatement est égale à 550 mm. Dans un autre cas d'espèce, d'un pneumatique de même dimension pour lequel la zone coupée est de longueur circonférentielle L égale à 80 mm, la pression acoustique mesurée atteint une valeur de 3,5 bars pour une pression d'éclatement de 9 bars. La longueur circonférentielle de l'ouverture après éclatement est égale à 450 mm.

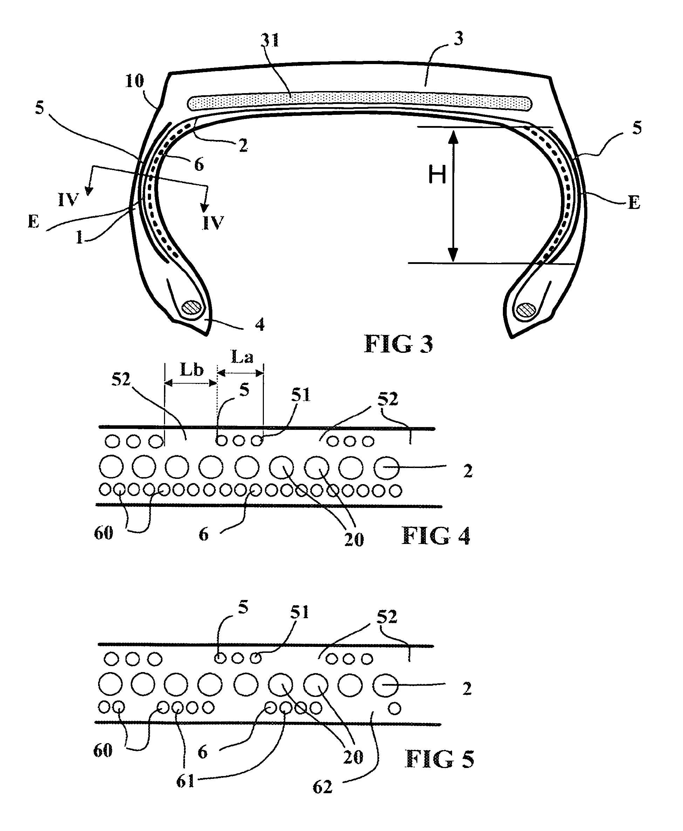

Un pneumatique 10 selon l'invention est montré avec la figure 3. Ce pneu comprend dans chaque flanc 1, deux armatures additionnelles s'étendant toutes les deux entre le voisinage de l'extrémité axiale de l'armature de sommet et le voisinage d'un bourrelet.

Une première armature additionnelle 6 suit sensiblement le profil de l'armature de carcasse 2 et est placée à l'intérieur de l'armature de carcasse (c'est-à-dire entre ladite armature et la cavité interne du pneu à l'intérieur de laquelle s'exerce la pression de gonflage du pneu). Cette première armature 6 est composée de renforts textiles aramide orientés dans le pneu de manière à faire un angle de 90 degrés avec la direction circonférentielle (dans ce cas chaque renfort est sensiblement contenu dans un plan contenant l'axe de rotation).

Les renforts textiles de cette première armature additionnelle 6 présentent une densité de 100 renforts par décimètre d'armature environ (cette densité étant mesurée perpendiculairement aux renforts sur l'armature avant pose en fabrication)

Dans une variante de l'invention, la première armature additionnelle est couplée à l'armature de carcasse par une épaisseur de matériau caoutchoutique dont l'épaisseur moyenne est supérieure à l'épaisseur moyenne de ladite première armature additionnelle.

En outre, une deuxième armature additionnelle 5 est placée axialement à l'extérieur de l'armature de carcasse. Cette armature additionnelle 5 s'étend sur une longueur radiale H, dans le plan de la figure 3, de part et d'autre du point E de l'armature de carcasse axialement le plus à l'extérieur lorsque le pneumatique est gonflé à sa pression nominale. Cette deuxième armature additionnelle 5 se termine radialement à l'extérieur au voisinage de l'armature de sommet 31. La première armature additionnelle 6 s'étend dans l'exemple montré sur une même longueur radiale égale à H. Bien entendu, il n'est pas indispensable que ces deux armatures additionnelles soient d'une même longueur. Il est judicieux que la première armature additionnelle, servant de support à l'armature de carcasse s'étende du bourrelet du pneu jusqu'à l'armature de sommet.

Sur la figure 4, on montre une coupe d'un flanc 1 du pneumatique 10 représenté à la figure 3. On distingue sur cette figure, les renforts de l'armature de carcasse 2 et de part et d'autre de cette armature les renforts des première et deuxième armatures, additionnelles. La première armature additionnelle 6 est composée d'une pluralité de renforts 60 espacés dans la direction circonférentielle d'une même distance.

La deuxième armature additionnelle 5 est formée d'une succession de premières parties 51 de largeur La et de deuxièmes parties 52 de largeur Lb, ces parties étant disposées en alternance (une première partie 51 suit dans la direction circonférentielle une deuxième partie 52). Les premières parties 51 ont une résistance à la rupture lorsqu'elles sont soumises à un effort dans la direction des renforts (c'est-à-dire perpendiculaire au plan de la figure) qui est supérieure à la résistance à la rupture des deuxièmes parties 52 dans la même direction. Par résistance à la rupture, on entend la force à rupture en daN par unité de longueur en décimètre (dm) (la résistance à la rupture d'une armature renforcée de renforts est sensiblement égale à la force de rupture de chaque renfort multipliée par le nombre de renforts par décimètre).

Chaque première partie 51 est constituée par un matériau de caoutchouc renforcé par des câbles parallèles entre eux. Les câbles sont disposés de manière à obtenir, à la fabrication de l'armature, 80 câbles par décimètre. Les câbles sont en Aramide 330*2 - 230/230 et ont une force à rupture unitaire de l'ordre de 100 daN. Le pas de pose est de 1.25 mm incluant le diamètre moyen du câble et le pont de caoutchouc entre deux câbles successifs : la distance moyenne entre deux câbles est en conséquence inférieure à 1 mm.

Chaque première partie 51 est de largeur moyenne La égale à 25 mm, cette largeur est mesurée sur l'armature avant son incorporation à la fabrication du pneu, cette largeur peut correspondre sensiblement à la largeur aux points radialement les plus à l'intérieur de la deuxième armature additionnelle 5 dans le pneu, dès lors que ces points sont relativement proches du bourrelet. D'une façon générale, la largeur de chaque deuxième partie en tout point d'un profil méridien de pneu est supérieure à 20 mm et va en augmentant des points radialement les plus proches de l'axe de rotation vers les points radialement les plus à l'extérieur. Un décimètre de nappe comprend environ 80 renforts par décimètre (dm) ; ces parties A ont en conséquence une résistance à la rupture (Fr_{A}) égale à 8000 daN/dm.

Chaque deuxième partie 52, de largeur Lb égale à 50 mm, est formée avec le même mélange de caoutchouc qui lie les renforts des premières parties 51 mais sans aucun renfort. La force de rupture des deuxièmes parties est très inférieure à celle des premières parties puisqu'elle est sensiblement égale à la force à rupture du mélange de caoutchouc, c'est-à-dire 20 daN/dm pour des niveaux d'épaisseur identiques.

Préférentiellement, la résistance à la rupture des premières parties 51 de la deuxième armature additionnelle 5 est au moins égale à 3000 daN/dm et encore plus préférentiellement au moins égale à 5000 daN/dm pour un pneumatique destiné à équiper un véhicule poids lourd.

Préférentiellement, la résistance à la rupture des deuxièmes parties 52 de la deuxième armature additionnelle 5 est au plus égale à 300 daN/dm et encore plus préférentiellement au plus égale à 100 daN/dm. L'adaptation de l'invention à une dimension usuelle de pneumatique pour véhicule poids lourd est aisée pour la personne de métier, sachant que préférentiellement la largeur d'une partie de plus faible résistance à la rupture est comprise entre 20 et 60 mm et encore plus préférentiellement entre 30 et 40 mm.

En outre, pour les gammes usuelles de pneumatiques pour véhicules poids lourd, il est judicieux de choisir, en combinaison avec les valeurs de résistance à la rupture données plus haut, des valeurs de largeurs telles que la somme des largeurs d'une première partie 51 et d'une deuxième partie 52 est au moins égale à 40 mm et au plus égale à 80 mm ce qui permet d'obtenir, dans le test pratiqué consistant à couper une forte proportion de renforts de l'armature de carcasse sur une largeur L de 80 mm, une longueur d'ouverture du flanc à l'éclatement inférieure à 150mm et ainsi de limiter la surpression à 1 mètre à une valeur inférieure à 1 bar.

La figure 5 montre une variante de l'invention selon laquelle la première armature 6 comprend des premières et des deuxièmes parties 61 et 62 de résistances différentes. Les premières parties 61 de forte résistance comportent des renforts orientés dans le flanc de manière à faire un angle de 90 degrés avec la direction circonférentielle (c'est-à-dire que chaque renfort de ces premières parties est sensiblement contenu dans un plan contenant l'axe de rotation du pneu). Les deuxièmes parties 62 de la première armature additionnelle 6 sont dépourvues de renforts. En outre, les premières parties 61 de forte résistance sont disposées de manière à être circonférentiellement en coïncidence avec les deuxièmes parties 52 (de faible résistance dans la direction perpendiculaire au plan de la figure).

Dans une variante de l'invention, la première armature additionnelle (6) comprend des premières parties (61) de plus grande résistance à la rupture que des deuxièmes parties (62), rigidités différentes (61, 62), ces premières et deuxièmes parties étant agencées de manière à être en déphasage circonférentiel avec des premières et des deuxièmes parties (51 et 52) de la deuxième armature additionnelle (5), les premières parties (51) étant de plus grande résistance à la rupture que les deuxièmes parties (52).

Selon une autre variante, le pneu selon l'invention comprend une première armature additionnelle composée d'une pluralité de renforts discontinus dans la direction circonférentielle.

Dans tous les exemples décrits, chaque armature additionnelle peut être prolongée de part et d'autre des flancs jusqu'à aller sous ou sur l'armature de sommet et dans les bourrelets.

Le dispositif de l'invention est particulièrement intéressant lorsque le pneumatique dispose d'un volume de cavité interne important, associé à un niveau de pression de gonflage élevé, comme cela est le cas dans les pneumatiques pour véhicules poids lourd, avion, pour engins de travaux de génie civil ou de travaux agricoles.

## Revendications

1. Pneumatique (10) pour véhicule portant de lourdes charges délimitant une cavité interne de gonflage, ce pneu comprenant une armature de carcasse radiale (2) surmontée radialement à l'extérieur par une armature de sommet (31), l'armature de carcasse (2) étant formée par une pluralité de renforts métalliques (21) enrobés dans un matériau d'enrobage en caoutchouc, les renforts (21) de l'armature de carcasse faisant un angle au moins supérieur à 75° avec la direction circonférentielle, le pneumatique comprenant en outre des bourrelets (4) pour être en contact avec une jante de montage, l'armature de carcasse (2) étant ancrée dans ces bourrelets, le pneumatique (10) comprenant deux flancs (1), chaque flanc (1) s'étendant entre un bourrelet (4) et le sommet (3), les deux flancs comprenant une première armature additionnelle (6) disposée soit entre l'armature de carcasse et la cavité interne du pneu soit axialement à l'extérieur de l'armature de carcasse et au moins l'un des flancs comprenant une deuxième armature additionnelle de renfort (5), la première armature additionnelle comprenant une pluralité de renforts de nature textile orientés selon un angle au moins égal à 80 degrés et au plus à 90 degrés avec la direction circonférentielle, la deuxième armature additionnelle (5) comprenant dans le sens circonférentiel et de façon alternée une pluralité de premières parties (51) et de deuxièmes parties (52), au moins une de ces parties comportant une pluralité de renforts enrobés dans un matériau de caoutchouc, ces renforts étant orientés dans une direction proche ou identique à celle des renforts de l'armature de carcasse, ces premières et deuxièmes parties ayant des résistances à la rupture, c'est-à-dire des forces à rupture par unité de largeur d'armature, mesurée dans la direction circonférentielle sur le pneu, telles que la résistance à la rupture des deuxièmes parties (52) est inférieure à la résistance à la rupture des premières parties (51), les première et deuxième armatures additionnelles étant disposées de part et d'autre de l'armature de carcasse, ce pneumatique étant **caractérisé en ce que** la largeur des deuxièmes parties mesurée aux points de la deuxième armature additionnelle radialement les plus à l'intérieur est au moins égale à 20 mm.

2. Pneumatique (10) selon la revendication 1 **caractérisée en ce que** la largeur des deuxièmes parties est au moins égale à 20 mm et au plus égale à 60 mm et **en ce que** la somme des largeurs d'une première partie 51 et d'une deuxième partie 52 est au moins égale à 40 mm et au plus égale à 80 mm.

3. Pneumatique (10) selon la revendication 1 ou la revendication 2 **caractérisée en ce que** la première armature additionnelle (6) est située axialement entre l'armature de carcasse et la cavité interne du pneu, la deuxième armature additionnelle (5) étant placée axialement à l'extérieur de ladite armature de carcasse.

4. Pneumatique (10) selon l'une des revendications 1 à 3 **caractérisée en ce que** la première armature additionnelle (6) s'étend dans l'un au moins des flancs au moins entre un point situé radialement à l'intérieur du point (E) axialement le plus à l'extérieur du profil de l'armature de carcasse du pneumatique monté sur sa jante de montage et gonflé à sa pression d'usage, et un point situé au voisinage d'une extrémité axiale de l'armature de sommet (31).

5. Pneumatique (10) selon l'une des revendications 1 à 4 **caractérisé en ce que** la première armature additionnelle (6) est couplée à l'armature de carcasse par une épaisseur de matériau caoutchoutique dont l'épaisseur moyenne est supérieure à l'épaisseur moyenne de la première armature additionnelle (6).

6. Pneumatique selon l'une des revendications 1 à 5 **caractérisé en ce que** la première armature additionnelle (6) est composée d'une pluralité de renforts discontinus.

7. Pneumatique selon la revendication 6 **caractérisé en ce que** les renforts de la première armature additionnelle (6) sont choisis parmi des renforts textiles en polyamide ou aramide ou polycétone ou polyester ou rayonne ou parmi des renforts hybrides c'est-à-dire des renforts formés avec au moins deux renforts textiles différents.

8. Pneumatique (10) selon l'une des revendications 1 à 7 **caractérisé en ce que** la première armature additionnelle (6) comprend des premières parties (61) et des deuxièmes parties ayant des rigidités différentes (61, 62), les premières parties (61) ayant une plus grande résistance à la rupture que les deuxièmes parties (62), ces premières et deuxièmes parties étant agencées de manière à être en déphasage circonférentiel avec des premières et des deuxièmes parties (51 et 52) de la deuxième armature additionnelle (5); les premières parties (51) étant de plus grande résistance à la rupture que les deuxièmes parties (52).

9. Pneumatique (10) selon l'une des revendications 1 à 8 **caractérisé en ce que** les première et deuxième armatures additionnelles s'étendent dans la direction radiale sur au plus 80 % de la hauteur de section du pneu.

## Claims

1. Tyre (10) for a vehicle carrying heavy loads delimiting an internal inflation cavity, this tyre comprising a radial carcass reinforcement (2) surmounted radially on the outside by a crown reinforcement (31), the carcass reinforcement (2) being formed of a plurality of metal reinforcing elements (21) coated in a rubber coating material, the reinforcing elements (21) of the carcass reinforcement making an angle at least greater than 75° with the circumferential direction, the tyre further comprising beads (4) to come into contact with a mounting rim, the carcass reinforcement (2) being anchored in these beads, the tyre (10) comprising two sidewalls (1), each sidewall (1) extending between a bead (4) and the crown (3), the two sidewalls comprising a first additional reinforcement (6) positioned either between the carcass reinforcement and the internal cavity of the tyre or axially on the outside of the carcass reinforcement and at least one of the sidewalls comprising a second additional reinforcement (5), the first additional reinforcement comprising a plurality of reinforcing elements of textile nature oriented at an angle at least equal to 80° and at most equal to 90° to the circumferential direction, the second additional reinforcement (5) comprising, in the circumferential direction and in an alternating manner, a plurality of first parts (51) and of second parts (52), at least one of these parts comprising a plurality of reinforcements coated in a rubber material, these reinforcements being oriented in a direction close to or identical to that of the reinforcing elements of the carcass reinforcement, these first and second parts having ultimate tensile strengths, that is to say forces at break per unit width of reinforcement, measured on the tyre in the circumferential direction, which are such that the ultimate tensile strength of the second parts (52) is lower than the ultimate tensile strength of the first parts (51), the first and second additional reinforcements being positioned one on each side of the carcass reinforcement, this tyre being **characterized in that** the width of the second parts, measured at the radially innermost points of the second additional reinforcement, is at least equal to 20 mm.

2. Tyre (10) according to Claim 1, **characterized in that** the width of the second parts is at least equal to 20 mm and at most equal to 60 mm and **in that** the sum of the width of a first part (51) and of a second part (52) is at least equal to 40 mm and at most equal to 80 mm.

3. Tyre (10) according to Claim 1 or Claim 2, **characterized in that** the first additional reinforcement (6) is situated axially between the carcass reinforcement and the internal cavity of the tyre, the second additional reinforcement (5) being positioned axially on the outside of the said carcass reinforcement.

4. Tyre (10) according to one of Claims 1 to 3, **characterized in that** the first additional reinforcement (6) extends in at least one of the sidewalls at least between a point situated radially on the inside of the axially outermost point (E) of the profile of the carcass reinforcement of the tyre mounted on its mounting rim and inflated to its service pressure, and a point situated near an axial end of the crown reinforcement (31).

5. Tyre (10) according to one of Claims 1 to 4, **characterized in that** the first additional reinforcement (6) is coupled to the carcass reinforcement by a thickness of rubber material the mean thickness of which is greater than the mean thickness of the first additional reinforcement (6).

6. Tyre according to one of Claims 1 to 5, **characterized in that** the first additional reinforcement (6) is made up of a plurality of discontinuous reinforcing elements.

7. Tyre according to Claim 6, **characterized in that** the reinforcing elements of the first additional reinforcement (6) are chosen from textile reinforcing elements made of polyamide or aramid or polyketone or polyester or rayon or from hybrid reinforcing elements, that is to say reinforcing elements formed using at least two different textile reinforcing elements.

8. Tyre (10) according to one of Claims 1 to 7, **characterized in that** the first additional reinforcement (6) comprises first parts (61) and second parts having different rigidities (61, 62), the first parts (61) having a higher ultimate tensile strength than the second parts (62), these first and second parts being arranged in such a way as to be circumferentially phase-shifted with respect to the first and second parts (51 and 52) of the second additional reinforcement (5), the first parts (51) having a higher ultimate tensile strength than the second parts (52).

9. Tyre (10) according to one of Claims 1 to 8, **characterized in that** the first and second additional reinforcements extend in the radial direction over at most 80% of the cross-section height of the tyre.

## Patentansprüche

1. Luftreifen (10) für ein schwere Lasten tragendes Fahrzeug, der einen inneren Aufpump-Hohlraum begrenzt, wobei dieser Reifen eine radiale Karkassenbewehrung (2) enthält, über der radial außen eine Scheitelbewehrung (31) liegt, wobei die Karkassenbewehrung (2) von einer Vielzahl von Metallverstärkungen (21) geformt wird, die mit einem Kautschukumhüllungsmaterial umhüllt sind, wobei die Verstärkungen (21) der Karkassenbewehrung einen Winkel von mindestens größer als 75° zur Umfangsrichtung bilden, wobei der Luftreifen außerdem Wülste (4) enthält, um mit einer Montagefelge in Kontakt zu sein, wobei die Karkassenbewehrung (2) in diesen Wülsten verankert ist, wobei der Luftreifen (10) zwei Flanken (1) enthält, wobei jede Flanke (1) sich zwischen einem Wulst (4) und dem Scheitel (3) erstreckt, wobei die zwei Flanken eine erste zusätzliche Bewehrung (6) enthalten, die entweder zwischen der Karkassenbewehrung und dem Innenhohlraum des Reifens oder axial außerhalb der Karkassenbewehrung angeordnet ist, und mindestens eine der Flanken eine zweite zusätzliche Verstärkungsbewehrung (5) enthält, wobei die erste zusätzliche Bewehrung eine Vielzahl von Verstärkungen textiler Beschaffenheit enthält, die gemäß einem Winkel mindestens gleich 80 Grad und höchstens gleich 90 Grad zur Umfangsrichtung ausgerichtet sind, wobei die zweite zusätzliche Bewehrung (5) in Umfangsrichtung und abwechselnd eine Vielzahl von ersten Bereichen (51) und von zweiten Bereichen (52) enthält, wobei mindestens einer dieser Bereiche eine Vielzahl von Verstärkungen aufweist, die mit einem Kautschukmaterial umhüllt sind, wobei diese Verstärkungen in einer Richtung nahe oder gleich derjenigen der Verstärkungen der Karkassenbewehrung ausgerichtet sind, wobei diese ersten und zweiten Bereiche derartige Reißfestigkeiten, d.h. Reißkräfte pro Bewehrungsbreiteneinheit gemessen in Umfangsrichtung auf dem Reifen, haben, dass die Reißfestigkeit der zweiten Bereiche (52) geringer als die Reißfestigkeit der ersten Bereiche (51) ist, wobei die erste und die zweite zusätzliche Bewehrung zu beiden Seiten der Karkassenbewehrung angeordnet sind, wobei dieser Luftreifen **dadurch gekennzeichnet ist, dass** die Breite der zweiten Bereiche gemessen an den radial am weitesten innen liegenden Punkten der zweiten zusätzlichen Bewehrung mindestens gleich 20 mm ist.

2. Luftreifen (10) nach Anspruch 1, **dadurch gekennzeichnet, dass** die Breite der zweiten Bereiche mindestens gleich 20 mm und höchstens gleich 60 mm ist, und dass die Summe der Breiten eines ersten Bereichs 51 und eines zweiten Bereichs 52 mindestens gleich 40 m und höchstens gleich 80 mm ist.

3. Luftreifen (10) nach Anspruch 1 oder Anspruch 2, **dadurch gekennzeichnet, dass** die erste zusätzliche Bewehrung (6) sich axial zwischen der Karkassenbewehrung und dem Innenhohlraum des Reifens befindet, während die zweite zusätzliche Bewehrung (5) axial außerhalb der Karkassenbewehrung angeordnet ist.

4. Luftreifen (10) nach einem der Ansprüche 1 bis 3, **dadurch gekennzeichnet, dass** die erste zusätzliche Bewehrung (6) sich in mindestens einer der Flanken mindestens zwischen einem Punkt, der sich radial innen bezüglich des axial am weitesten außen liegenden Punkts (E) des Profils der Karkassenbewehrung des auf seine Montagefelge montierten und auf seinen Betriebsluftdruck aufgepumpten Luftreifens befindet, und einem Punkt erstreckt, der sich in der Nähe eines axialen Endes der Scheitelbewehrung (31) befindet.

5. Luftreifen (10) nach einem der Ansprüche 1 bis 4, **dadurch gekennzeichnet, dass** die erste zusätzliche Bewehrung (6) mit der Karkassenbewehrung durch eine Kautschukmaterialdicke gekoppelt ist, deren mittlere Dicke größer als die mittlere Dicke der ersten zusätzlichen Bewehrung (6) ist.

6. Luftreifen nach einem der Ansprüche 1 bis 5, **dadurch gekennzeichnet, dass** die erste zusätzliche Bewehrung (6) aus einer Vielzahl von unzusammenhängenden Verstärkungen besteht.

7. Luftreifen nach Anspruch 6, **dadurch gekennzeichnet, dass** die Verstärkungen der ersten zusätzlichen Bewehrung (6) unter textilen Verstärkungen aus Polyamid oder Aramid oder Polyketon oder Polyester oder Rayon oder unter hybriden Verstärkungen ausgewählt werden, d.h. Verstärkungen, die mit mindestens zwei unterschiedlichen textilen Verstärkungen geformt sind.

8. Luftreifen (10) nach einem der Ansprüche 1 bis 7, **dadurch gekennzeichnet, dass** die erste zusätzliche Bewehrung (6) erste Bereiche (61) und zweite Bereiche enthält, die unterschiedliche Steifigkeiten (61, 62) haben, wobei die ersten Bereiche (61) eine größere Reißfestigkeit als die zweiten Bereiche (62) haben, wobei diese ersten und zweiten Bereiche so angeordnet sind, dass sie zu ersten und zweiten Bereichen (51 und 52) der zweiten zusätzlichen Bewehrung (5) umfangsphasenverschoben sind, wobei die ersten Bereiche (51) eine größere Reißfestigkeit haben als die zweiten Bereiche (52).

9. Luftreifen (10) nach einem der Ansprüche 1 bis 8, **dadurch gekennzeichnet, dass** die ersten und zweiten zusätzlichen Bewehrungen sich in der radialen Richtung über höchstens 80 % der Querschnittshöhe des Reifens erstrecken.
